# EUROPÄISCHE PATENTSCHRIFT

(11) **EP 3 496 924 B1**
(45) Veröffentlichungstag und Bekanntmachung des Hinweises auf die Patenterteilung: **16.02.2022**
(21) Anmeldenummer: 17761429.4
(22) Anmeldetag: 26.07.2017
(51) Int. Cl.: B29B 17/04, B01F 5/10, B01F 5/24, B01F 3/18, B33Y 30/00, B29C 64/153, B22F 3/00, B22F 3/105

(54) **VERFAHREN ZUR AUFBEREITUNG VON ALTPULVER AUS GENERATIVEN FERTIGUNGSVERFAHREN**
METHOD FOR PREPARING WASTE POWDER FROM GENERATIVE PRODUCTION PROCESSES
PROCÉDÉ DE RETRAITEMENT DE POUDRE USAGÉE PROVENANT D'UN PROCÉDÉ DE FABRICATION ADDITIVE

(30) Priorität: 08.08.2016 DE 102016009770
(43) Veröffentlichungstag der Anmeldung: 19.06.2019
(73) Patentinhaber: Griessbach, Sören, 09224 Chemnitz (DE)
(72) Erfinder: Griessbach, Sören, 09224 Chemnitz (DE)
(74) Vertreter: Findeisen Neumann Scheit Partnerschaft mbB
(86) Internationale Anmeldenummer: PCT/DE2017/000233
(87) Internationale Veröffentlichungsnummer: WO 2018/028728

(56) Entgegenhaltungen:
- EP-A1- 1 663 622
- WO-A1-01/38061
- WO-A1-2012/053922
- DE-A1-102013 005 008

## Beschreibung

Die Erfindung betrifft ein Verfahren zur Aufbereitung von Altpulver aus generativen Fertigungsverfahren, mit denen dreidimensionale Objekte schichtweise aus einem pulverförmigen Grundmaterial hergestellt werden, indem auf einer Bauplattform zunächst eine erste Schicht des Grundmaterials aufgetragen wird, das danach entsprechend den Koordinaten einer ersten Ebene des aufzubauenden Objektes mit einem Laser bestrahlt und verfestigt wird, wobei nach Abschluss der Bearbeitung in dieser ersten Ebene die Bauplattform um die Schichtdicke einer weiteren Ebene abgesenkt und eine neue Pulverschicht aufgetragen wird und wobei diese Verfahrensschritte entsprechend der Anzahl der Ebenen solange wiederholt werden, bis ein dreidimensionales Objekt aufgebaut ist, nach dessen Fertigstellung außerhalb der vom Laser erfassten Bereiche pulverförmiges Material als Altpulver verbleibt.

Für generative Fertigungsverfahren sind verschiedenartige technische Lösungen bekannt, bei denen ein dreidimensionales Objekt schichtweise durch Sintern oder Schmelzen eines pulverförmigen Grundmaterials hergestellt wird. Dabei werden oftmals Kunststoffpulver als Ausgangsmaterial verwendet, die aufgrund ihrer niedrigen Schmelzpunkte und geringen Wärmeleitfähigkeit gut zu verarbeiten sind.

Diesbezüglich typische Verfahren sind Selektives Lasersintern (SLS), Stereolithografie (STL) und Fused Deposition Modeling (FDM). Beispielsweise wird beim selektiven Lasersintern ein 3D-CAD-File in zweidimensionale Ebenen zerlegt, die eine Dicke von etwa 0,1 mm aufweisen. Die Koordinaten dieser Ebenen werden als Datensätze zu einem Steuerrechner übertragen. Danach wird auf einer Bauplattform zunächst eine Schicht des pulverförmigen Ausgangsmaterials aufgetragen, Solche Materialien sind bereits Gegenstand zahlreicher Schutzrechte. So beschreibt z.B. DE 197 47 309 B4 ein Polyamidpulver, das für das selektive Lasersintern konzipiert ist. Das auf die Bauplattform aufgetragene Pulver wird dann an seiner Oberfläche entsprechend der Koordinaten der ersten Ebene mit einem Laser bestrahlt. Durch diese Energieeinwirkung wird das mit dem Laser bestrahlte Pulver gesintert, so dass sich ein festes Gefüge ausbildet. Nach Abschluss der Bearbeitung in dieser ersten Ebene wird die Bauplattform um die Schichtdicke einer Ebene abgesenkt und eine neue Pulverschicht wird aufgetragen. Entsprechend der Anzahl der Ebenen werden diese Schritte wiederholt und somit wird schichtweise ein dreidimensionales Objekt aufgebaut.

Während der von Ebene zu Ebene fortschreitenden Bearbeitung verbleibt außerhalb der vom Laser erfassten Bereiche weiterhin pulverförmiges Material. Dieses Pulver umgibt das sich aufbauende dreidimensionale Objekt und bewirkt somit während der weiteren Bearbeitung zunächst eine gewisse Abstützung. Allerdings verbleibt dieses Pulver auch, nachdem das dreidimensionale Objekt vollständig aufgebaut ist und von der Bauplattform entnommen wird.

Somit ist es an sich naheliegend, dieses nicht verfestigte und üblicherweise als "Altpulver" bezeichnete pulverförmige Material für den Aufbau eines weiteren dreidimensionalen Objektes zu verwenden. Dies ist jedoch nur bedingt möglich, weil zumindest die nahe am aufgebauten Objekt angeordneten Anteile des Altpulvers bei der vorherigen Bearbeitung mit Temperaturen knapp unterhalb vom Schmelzpunkt beaufschlagt worden sind. Diese thermische Belastung führt zwangsläufig zu einem Alterungsprozess, in dessen Ergebnis sich die ursprünglichen Eigenschaften des pulverförmigen Ausgangsmaterials überwiegend etwas verändern. Dies hat dazu geführt, dass Altpulver nicht als alleiniges Ausgangsmaterial verwendet wird, sondern stets mit neuem Pulver gemischt wird,

In DE 103 30 590 A1 wird dargelegt, dass der Anteil an Altpulver erhöht werden kann, sofern eine Mischung aus Altpulver und Neupulver ein Polyamid aufweist, dessen Verhältnis von Carboxyl-Endgruppen zu Amino-Endgruppen mindestens 2:1 beträgt.

EP 2 368 696 B1 beschreibt eine Pulvermischung aus zwei Polyamid 12-Pulvern, die jeweils unterschiedliche Anstiege der Viskositätszahlen aufweisen und in einem Verhältnis zwischen 10 und 30 Gewichtsprozent miteinander gemischt werden.

Die benannten Fundstellen zum Stand der Technik betreffen primär chemisch aufeinander abgestimmte Zusammensetzungen von Altpulver und Neupulver. Allerdings haben Versuche ergeben, dass eine lediglich chemische Abstimmung der Komponenten zumindest in einigen Einsatzfällen nicht ausreichend ist, um durch die Vermischung von Altpulver und Neupulver ein qualitativ hochwertiges Grundmaterial zur Nutzung in generativen Fertigungsverfahren zu erzielen. Offensichtlich sind weitere Aufbereitungsschritte zweckmäßig, wobei diesbezüglich jedoch kaum exakte Angaben aus der Fachliteratur bekannt sind.

Aus WO 2012/053 922 A1 ist ein Verfahren zur Aufbereitung von Altpulver aus generativen Fertigungsverfahren bekannt, mit denen dreidimensionale Objekte schichtweise aus einem pulverförmigen Grundmaterial hergestellt werden. Dabei wird das auf einer Bauplattform nach dem Aufbau eines dreidimensionalen Objektes verbleibende pulverförmige Material, das nunmehr ein Altpulver darstellt, einer mechanischen Bearbeitung unterzogen, indem es mit einem Mahlwerk zerkleinert wird.

Ein ähnlicher Lösungsansatz ist aus WO 01/38 061 A1 bekannt, indem auch hier Altpulver mit einem Mahlwerk zerkleinert wird.

Aufgabe der Erfindung ist es, ein Verfahren zur kombinierten mechanischen und stofflichen Aufbereitung von Altpulver zu schaffen, mit dem das Altpulver in eine derartige Struktur gebracht wird, das nachfolgend durch Mischung mit oder auch ohne Neupulver bzw. Mischungen von Neu- und Altpulver ein hochwertiges pulverförmiges Material für generative Fertigungsverfahren verfügbar wird.

Diese Aufgabe wird gelöst, indem das Altpulver einer mechanischen Bearbeitung unterzogen wird, indem es mit einem Mahlwerk auf eine Korngröße zerkleinert wird, die kleiner ist als die ursprüngliche Korngröße im Zustand als Neupulver. Ausgestaltungen sind Gegenstand von Unteransprüchen, deren technische Merkmale in einem Ausführungsbeispiel näher erläutert werden.

Somit wird ein Verfahren für eine kombinierte mechanische und stoffliche Aufbereitung von Altpulver aus generativen Fertigungsverfahren verfügbar. Bevorzugtes Anwendungsgebiet sind Lasersinterprozesse, bei denen agglomeriertes Altpulver auf Polymerbasis wieder auf seine eigentliche bzw. sogar feinere Ausgangsform durch eine mechanische Bearbeitung gebracht wird. Gleichzeitig wird durch definierte Temperaturverläufe und temporäre Beaufschlagungen mit flüssigen Medien eine stoffliche Bearbeitung realisiert.

Nachfolgend wird ein Ausführungsbeispiel der Erfindung beschrieben:
Das erfindungsgemäße Verfahren ist für eine Aufbereitung von Altpulver aus generativen Fertigungsverfahren geeignet, bei denen dreidimensionale Objekte schichtweise aus einem pulverförmigen Grundmaterial hergestellt werden. Hierbei wird auf einer Bauplattform zunächst eine erste Schicht des Grundmaterials aufgetragen, das danach entsprechend den Koordinaten einer ersten Ebene des aufzubauenden Objektes mit einem Laser bestrahlt und verfestigt wird. Nach Abschluss der Bearbeitung in der ersten Ebene wird die Bauplattform um die Schichtdicke einer weiteren Ebene abgesenkt und es wird eine neue Pulverschicht aufgetragen. Gleichartige Verfahrensschritte werden entsprechend der Anzahl der Ebenen solange wiederholt, bis ein dreidimensionales Objekt aufgebaut ist. Ein derartiger Ablauf ist bekannt, so dass hierzu auf nähere Darlegungen verzichtet werden kann.

Wesentlich im vorliegenden Sachverhalt ist jedoch, wie das nach der Fertigstellung des dreidimensionalen Objektes verbleibende pulverförmige Material als sog. Altpulver behandelt wird.

Dieses Altpulver wird einer mechanischen Bearbeitung unterzogen, indem es mit einem Mahlwerk zerkleinert wird. Dabei wird das Altpulver vorzugsweise auf eine Korngröße zerkleinert, die der ursprünglichen Korngröße im Zustand als Neupulver entspricht. Ebenso ist es möglich, dass das Altpulver auf eine noch kleinere Korngröße zerkleinert wird, also auf eine Größe, die kleiner ist als die ursprüngliche Korngröße im Zustand als Neupulver.

Vorteilhaft ist dabei eine Beaufschlagung mit Stickstoff. Insbesondere wird die mechanische Bearbeitung des Altpulvers in einem Temperaturbereich zwischen - 40°C und + 80°C durchgeführt.

Weiterhin ist vorgesehen, dass das Altpulver während der mechanischen Bearbeitung zunächst mit Wasser oder mit Ethanol besprüht und nachfolgend wieder getrocknet wird.

## Patentansprüche

1. Verfahren zur Aufbereitung von Altpulver aus generativen Fertigungsverfahren, mit denen dreidimensionale Objekte schichtweise aus einem pulverförmigen Grundmaterial hergestellt werden, indem auf einer Bauplattform zunächst eine erste Schicht des Grundmaterials aufgetragen wird, das danach entsprechend den Koordinaten einer ersten Ebene des aufzubauenden Objektes mit einem Laser bestrahlt und verfestigt wird, wobei nach Abschluss der Bearbeitung in dieser ersten Ebene die Bauplattform um die Schichtdicke einer weiteren Ebene abgesenkt und eine neue Pulverschicht aufgetragen wird und wobei diese Verfahrensschritte entsprechend der Anzahl der Ebenen solange wiederholt werden, bis ein dreidimensionales Objekt aufgebaut ist, nach dessen Fertigstellung außerhalb der vom Laser erfassten Bereiche pulverförmiges Material als Altpulver verbleibt, wobei das Altpulver einer mechanischen Bearbeitung unterzogen wird, indem es mit einem Mahlwerk zerkleinert wird, **dadurch gekennzeichnet,**
**dass** das Altpulver auf eine Korngröße zerkleinert wird, die kleiner ist als die ursprüngliche Korngröße im Zustand als Neupulver.

2. Verfahren nach Anspruch 1, **dadurch gekennzeichnet,**
**dass** die mechanische Bearbeitung des Altpulvers unter einer Beaufschlagung mit Stickstoff durchgeführt wird.

3. Verfahren nach Anspruch 1, **dadurch gekennzeichnet,**
**dass** die mechanische Bearbeitung des Altpulvers in einem Temperaturbereich zwischen "- 40°C und + 80°C" durchgeführt wird.

4. Verfahren nach Anspruch 1, **dadurch gekennzeichnet,**
**dass** das Altpulver während der mechanischen Bearbeitung zunächst mit Wasser oder mit Ethanol besprüht und nachfolgend wieder getrocknet wird.

5. Verfahren nach Anspruch 1, **dadurch gekennzeichnet,**
**dass** das Altpulver auf eine Korngröße zerkleinert wird, die der ursprünglichen Korngröße im Zustand als Neupulver entspricht.

## Claims

1. A method for preparing waste powder from generative production processes, by means of which three-dimensional objects are produced in layers from a powdery base material in that initially a first layer of said base material is applied to a construction platform, which first layer is then irradiated and hardened in accordance with the coordinates of a first plane of the object to be built using a laser, wherein, after completion of processing in said first plane, the construction platform is lowered by the layer thickness of another plane and a new powder layer is applied, and wherein these process steps are repeated in accordance with the number of planes until a three-dimensional object is built, upon completion of which powdery material remains as waste powder outside the areas covered by the laser, wherein said waste powder is subjected to mechanical processing in that it is reduced to small pieces using a grinding mill, **characterized in that**
the waste powder is preferably reduced to a grain size which is smaller than the original grain size of the powder in its new condition.

2. The method according to claim 1, **characterized in that**
the mechanical treatment of the waste powder is performed with exposure to nitrogen.

3. The method according to claim 1, **characterized in that**
the mechanical processing of the waste powder is carried out in a temperature range between "- 40°C and + 80°C".

4. The method according to claim 1, **characterized in that**,
during mechanical processing, the waste powder is first sprayed with water or with ethanol and subsequently dried again.

5. The method according to claim 1, **characterized in that**
the waste powder is reduced to a grain size which matches the original grain size of the powder in its condition as new powder.

## Revendications

1. Procédé de retraitement de poudre usagée provenant d'un procédé de fabrication additive, à l'aide duquel des objets tridimensionnels sont fabriqués par couches à partir d'un matériau de base pulvérulent, en appliquant d'abord sur une plate-forme de construction une première couche du matériau de base, qui est ensuite irradié et solidifié par un laser conformément aux coordonnées d'un premier plan de l'objet à construire. Une fois le traitement terminé dans ce premier plan, la plate-forme de construction est abaissée de l'épaisseur de couche d'un autre plan et une nouvelle couche de poudre est appliquée, ces étapes de processus étant répétées en fonction du nombre de niveaux jusqu'à ce qu'un objet tridimensionnel soit construit, après l'achèvement duquel il reste, en dehors des zones détectées par le laser, du matériau pulvérulent sous forme de poudre usagée, la poudre usagée étant soumise à un traitement mécanique en étant broyée à l'aide d'un broyeur, **caractérisé en ce que**,
la poudre usagée est broyée à une taille de grain inférieure à la taille de grain initiale à l'état de poudre neuve.

2. Procédé selon la revendication 1, **caractérisé en ce que**
le traitement mécanique de la poudre usagée est effectué sous un apport d'azote.

3. Procédé selon la revendication 1, **caractérisé en ce que**
le traitement mécanique de la poudre usagée est effectué dans une plage de température comprise entre
"- 40°C et + 80°C".

4. Procédé selon la revendication 1, **caractérisé en ce que**
la poudre usagée est d'abord aspergée d'eau ou d'éthanol pendant le traitement mécanique et est ensuite à nouveau séchée.

5. Procédé selon la revendication 1, **caractérisé en ce que**
la poudre usagée est broyée en une taille de grain correspondant à la granulométrie initiale à l'état de poudre neuve.
